# FASCICULE DE BREVET EUROPEEN

(11) **EP 4 294 716 B1**
(45) Date de publication et mention de la délivrance du brevet: **01.04.2026**
(21) Numéro de dépôt: 22708995.0
(22) Date de dépôt: 15.02.2022
(51) Int. Cl.: B63H 9/04, B63H 9/061, B63H 9/02

(54) **SYSTEME GENERATEUR DE PORTANCE ET BATEAU MUNI D'UN TEL SYSTEME**
AUFZUGSERZEUGENDES SYSTEM UND MIT EINEM SOLCHEN SYSTEM AUSGESTATTETES BOOT
LIFT GENERATING SYSTEM AND BOAT EQUIPPED WITH SUCH A SYSTEM

(30) Priorité: 17.02.2021 FR 2101534
(43) Date de publication de la demande: 27.12.2023
(73) Titulaire: CENT RECH ARCHIT INDU NAUTIQUE, 17000 La Rochelle (FR)
(72) Inventeur: PALLU DE LA BARRIERE, Philippe, 17000 LA ROCHELLE (FR); VEDRENNE, Jérôme, 44500 LA BAULE (FR)
(74) Mandataire: Ipsilon
(86) Numéro de dépôt international: PCT/FR2022/050268
(87) Numéro de publication internationale: WO 2022/175622

(56) Documents cités:
- EP-A1- 0 055 638
- WO-A1-2018/211260
- WO-A2-2014/131873
- FR-A1- 2 275 360
- FR-A2- 2 503 286

## Description

### DOMAINE DE L'INVENTION

La présente invention concerne de manière générale les systèmes destinés à être placés dans de l'air en mouvement pour produire une portance, ou générateurs de portance. Dans le cas de véhicules propulsés par le vent, ces systèmes sont encore appelés propulseurs éoliens.

### ART ANTERIEUR

On connait de l'état de la technique, et notamment du document FR2503286A2, des propulseurs éoliens qui comprennent un corps creux allongé, des zones d'aspiration ménagées le long de la paroi périphérique du corps creux et des moyens d'aspiration logés à l'intérieur du corps creux. L'aspiration au niveau de la paroi périphérique du propulseur permet de limiter le décollement de l'écoulement de l'air par rapport à la paroi du propulseur.

Le document FR2503286A2 décrit ainsi une aile dont le corps loge plusieurs ventilateurs.

Il est cependant souhaitable de pouvoir améliorer les performances des propulseurs.

### RESUME DE L'INVENTION

A cet effet, l'invention a pour objet un système générateur de portance, destiné à être placé dans de l'air en mouvement, afin de produire une force de portance, le système générateur de portance comprenant :
- un corps creux, appelé aile, allongé selon un axe, la paroi périphérique de l'aile présentant au moins une ouverture, appelée ouverture d'aspiration, adaptée à faire communiquer l'extérieur de l'aile avec l'intérieur de l'aile ; et
- un dispositif d'aspiration permettant d'aspirer l'air à travers ladite au moins une ouverture d'aspiration ;

caractérisé en ce que le système générateur de portance comprend un support qui porte l'aile et par rapport auquel l'aile est montée pivotante autour d'un axe sensiblement parallèle à l'axe de l'aile,
et ledit dispositif d'aspiration comprend un ventilateur situé à l'extérieur de l'aile et en communication fluidique avec l'intérieur de l'aile pour aspirer l'air à travers ladite au moins une ouverture d'aspiration de l'aile et refouler l'air aspiré par une sortie du ventilateur,
le ventilateur comprenant une roue, entourée d'une enveloppe qui définit autour de la roue une conduite permettant de guider l'air refoulé par la roue, et un moteur pour l'entrainement en rotation de la roue autour d'un axe sensiblement parallèle à l'axe de l'aile, l'enveloppe du ventilateur présentant une sortie d'axe sensiblement orthogonal à l'axe de la roue du ventilateur.

Le fait de positionner le dispositif d'aspiration à l'extérieur de l'aile (encore appelé corps creux ou profil portant) permet de ne pas contraindre l'encombrement du dispositif d'aspiration aux dimensions de l'intérieur de l'aile pour le choix du dispositif d'aspiration, contrairement aux solutions de l'état de la technique qui logent le dispositif d'aspiration à l'intérieur de l'aile. De cette manière il est possible de choisir un ventilateur dont le rendement est maximisé en sélectionnant un couple diamètre / vitesse de rotation particulièrement efficace et qui permette d'assurer le débit d'aspiration de l'aile entière.

La fonction principale du ventilateur est de de ventiler l'aile. Préférentiellement, le ventilateur est situé au plus près de l'extrémité inférieure de l'aile.

Le système selon l'invention permet ainsi d'utiliser un ventilateur de type centrifuge ou hélico-centrifuge afin d'obtenir la performance de propulsion du système générateur de portance souhaitée, sans avoir à augmenter la section de l'aile.

Pour obtenir le point de fonctionnement du système générateur de portance avec le même rendement et des moyens d'aspiration localisés à l'intérieur de l'aile, il serait nécessaire de diviser les moyens d'aspiration en plusieurs modules répartis le long de l'aile, ce qui augmenterait la complexité du système, les coûts de fabrication et de maintenance.

Le ventilateur centrifuge peut être placé au pied de l'aile.

À l'état monté du système selon l'invention sur le pont d'un bateau, le châssis du ventilateur est fixe par rapport au pont du navire. De cette manière, il est possible de rejeter l'air parallèlement à l'axe longitudinal du navire en orientant la sortie d'air correspondante du ventilateur selon cet axe, vers l'arrière du bateau. L'air rejeté vient alors participer à l'effort propulsif par un effet de jet.

Dans les solutions connues de l'état de la technique où les moyens d'aspiration sont placés à l'intérieur de l'aile, la direction du rejet de l'air dépend de l'orientation du propulseur, de sorte que l'air rejeté ne participe pas nécessairement à l'effort propulsif du bateau dans l'axe du bateau.

Le montage à pivotement de l'aile par rapport au support destiné à être fixé sur le pont du bateau permet à l'aile de tourner, de préférence autour de son axe vertical, de manière à s'orienter par rapport à la direction du vent apparent.

Avantageusement, un orifice localisé dans la partie inférieure de l'aile permet une communication directe entre le ventilateur et l'intérieur de l'aile. Cet arrangement permet de réduire les pertes de charge qui seraient présentes dans des canalisations intermédiaires. Selon un mode de réalisation particulier, on peut prévoir de disposer, entre l'aile et le ventilateur, une conduite de longueur inférieure au diamètre du ventilateur, par exemple d'une longueur de quelques dizaines de centimètres pour un diamètre du ventilateur de l'ordre de deux mètres.

Le ventilateur représente une masse non négligeable du système. Le fait de placer ce ventilateur à la base de l'aile présente de nombreux avantages.

Les masses embarquées sont soumises aux accélérations du navire. Le fait de placer le ventilateur en-dehors et au pied de l'aile permet de réduire fortement les efforts qui s'exercent sur l'aile. En effet, deux types d'efforts se combinent ici aux accélérations du navire. D'une part les efforts d'inertie, directement liés à la masse du ventilateur centrifuge et d'autre part les efforts gyroscopiques issus de la mise en rotation du ventilateur. Ainsi, la structure du système peut être allégée. Les coûts de fabrication sont réduits.

Placer le ventilateur au pied de l'aile en facilite l'accès de sorte que les opérations de maintenance sont facilitées.

Selon un aspect particulier, à l'état monté sur le pont du bateau, le dispositif d'aspiration est situé sous l'aile, entre le pont du bateau et l'aile.

Il est à noter que dans le document FR2503286A2 chaque ventilateur n'est pas situé à l'extérieur de l'aile, mais bien à l'intérieur de l'aile.

On comprend que selon l'invention, le pivotement de l'aile autour de son axe n'entraine pas de pivotement ou changement d'orientation du ventilateur.

Le système générateur peut aussi comporter une ou plusieurs des caractéristiques suivantes prises dans toute combinaison techniquement admissible.

Selon un mode de réalisation, le système comprend un élément de liaison creux qui s'étend au moins en partie entre l'extrémité inférieure de l'aile et le ventilateur pour permettre une communication fluidique entre l'aile et le ventilateur.

Selon un mode de réalisation, l'élément de liaison comprend une paroi d'adaptation dans laquelle est ménagée une ouverture qui communique avec le ventilateur.

Selon un mode de réalisation, la paroi d'adaptation est munie d'un élément annulaire qui s'étend autour de l'ouverture de la paroi d'adaptation et du côté de l'intérieur de l'aile, la section dudit élément annulaire présentant un profil courbe, par exemple convexe, pour limiter les pertes de charge du flux d'air entre l'aile et le ventilateur.

Selon un mode de réalisation, le ventilateur est contenu dans une enveloppe imaginaire qui entoure le support. Autrement dit, le ventilateur est compris dans l'encombrement hors-tout du support.

Selon un mode de réalisation, le ventilateur est un ventilateur centrifuge.

Selon un mode de réalisation, le ventilateur est un ventilateur hélico-centrifuge.

Selon un mode de réalisation, l'aile est munie d'un dispositif générateur de portance verticale, monté à proximité de l'une et/ou l'autre des extrémités de l'aile.

Selon un mode de réalisation, le dispositif générateur de portance verticale comporte au moins une partie qui est montée mobile autour d'un axe sensiblement orthogonal à l'axe de l'aile.

Selon un mode de réalisation, le dispositif générateur de portance verticale comporte un système d'aspiration permettant d'aspirer l'air extérieur vers l'intérieur de l'aile.

Selon un mode de réalisation, la paroi périphérique de l'aile est munie d'un volet mobile par rapport à la paroi périphérique pour permettre la séparation du flux d'air extrados et du flux d'air intrados.

Selon un mode de réalisation, la longueur du volet est égale à la longueur de l'aile.

Selon un mode de réalisation, la paroi périphérique de l'aile présente deux ouvertures d'aspiration, et un système d'obturation, tel qu'un volet, pour permettre d'obturer sélectivement l'une des ouvertures d'aspiration et de libérer l'autre ouverture d'aspiration.

Selon un mode de réalisation, l'enveloppe du ventilateur est prolongée par une conduite de refoulement de section variable, la section étant de préférence décroissante en direction de l'extrémité de sortie de la conduite de refoulement.

Selon un mode de réalisation, le système comprenant un système de basculement permettant de faire basculer l'aile, et éventuellement son support, autour d'un axe sensiblement orthogonal à l'axe de l'aile, de préférence sensiblement horizontal.

L'invention concerne également un bateau comprenant au moins un système générateur de portance selon l'un quelconque des modes de réalisation proposés ci-dessus, dans lequel le ventilateur est situé entre l'aile et le pont du bateau, et, l'aile étant montée pivotante par rapport au pont du bateau, autour d'un axe sensiblement parallèle à l'axe de l'aile.

Selon un aspect particulier, le support est agencé de sorte que, lorsque l'aile s'étend verticalement (c'est-à-dire perpendiculairement au pont du bateau) et pivote autour d'un axe sensiblement parallèle à l'axe de l'aile (c'est-à-dire lors du fonctionnement de l'aile - à l'état vertical de l'aile - et hormis une éventuelle mobilité de bascule du support autour d'un axe orthogonal à l'axe de l'aile), le support reste fixe par rapport au pont du bateau.

Selon un aspect particulier, le ventilateur est agencé de sorte que, lorsque l'aile s'étend verticalement et pivote autour d'un axe sensiblement parallèle à l'axe de l'aile, l'enveloppe du ventilateur reste fixe par rapport au pont du bateau.

Selon un mode de réalisation, l'axe de la sortie de l'enveloppe du ventilateur est dirigé vers l'arrière du bateau, de préférence sensiblement parallèlement à l'axe longitudinal du bateau.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- [Fig. 1] la Figure 1 est une vue en perspective d'un bateau équipé de plusieurs systèmes générateurs de portance selon un mode de réalisation de l'invention ;
- [Fig. 2] la Figure 2 est une vue de la zone de détail Il de la Figure1 ;
- [Fig. 3] la Figure 3 est une vue en perspective d'un système générateur de portance selon un mode de réalisation de l'invention, montrant un flux d'air incident dont une partie est aspirée dans l'aile par le ventilateur puis refoulé ;
- [Fig. 3A] la Figure 3A est une vue en perspective du système générateur de portance de la Figure 3, avec un autre angle d'orientation de l'aile par rapport au support ;
- [Fig. 4] la Figure 4 est une vue de dessus du système générateur de portance de la Figure 3 ;
- [Fig. 5] la Figure 5 est une vue selon la coupe A-A de la partie inférieure du système générateur de portance de la Figure 4 ;
- [Fig. 5A] la Figure 5A est une vue schématique de la partie inférieure du système générateur de portance pour faciliter la visualisation de l'agencement des éléments de la partie inférieure du système ;
- [Fig. 6] la Figure 6 est une vue en éclaté de la partie inférieure du système générateur de portance de la Figure 4.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

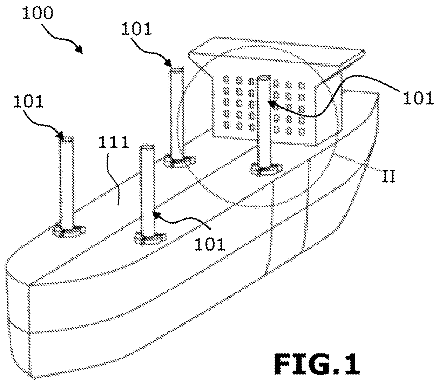

En référence à la Figure 1, on a représenté plusieurs systèmes 101 générateurs de portance montés sur le pont 111 d'un bateau 100.

La description qui suit est réalisée pour un système 101 générateur de portance, mais s'applique aussi à plusieurs systèmes 101 générateurs de portance.

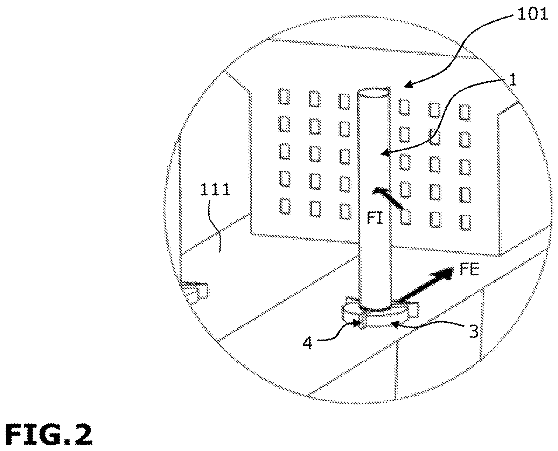

Comme illustré à la Figure 2, le système 101 générateur de portance est placé dans un flux d'air FI en mouvement qui permet de produire une force de portance. Comme détaillé ci-après, ce système 101 générateur de portance présente une performance de propulsion plus élevée, sans avoir à augmenter les dimensions de l'aile.

### Aile

Le système générateur de portance comprend un corps creux 1 allongé selon un axe A1. Le corps creux est appelé communément aile.

L'aile présente un profil aérodynamique. Différentes formes de profil peuvent être utilisées. Dans l'exemple illustré aux figures, le profil est de forme ovoïde.

La paroi périphérique 10 de l'aile présente au moins une ouverture 12, appelée ouverture d'aspiration, apte à communiquer avec l'intérieur 102 de l'aile 1. Dans l'exemple illustré aux figures, la paroi périphérique 10 présente deux ouvertures 12 d'aspiration, réparties de préférence symétriquement par rapport à un axe de symétrie du profil de l'aile.

Le corps creux est muni d'un volet 14 mobile. Le volet permet de modifier la cambrure du profil de l'aile afin d'augmenter la portance, que le vent vienne d'un côté ou de l'autre du navire. Le navire peut naviguer sur les deux amures - bâbord amure ou tribord amure. Selon un mode de réalisation, on peut prévoir que le déplacement du volet permette d'obturer une ouverture 12 d'aspiration et de libérer l'autre ouverture 12 d'aspiration.

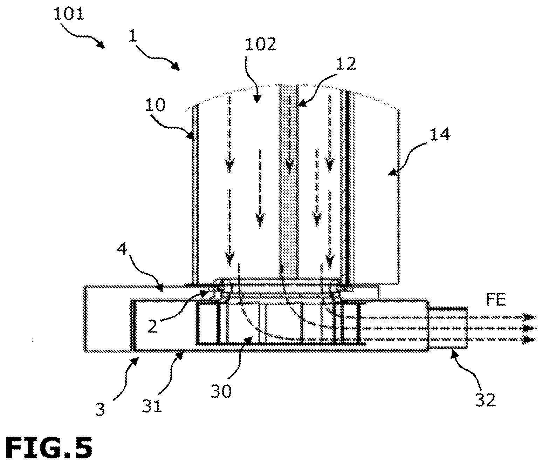

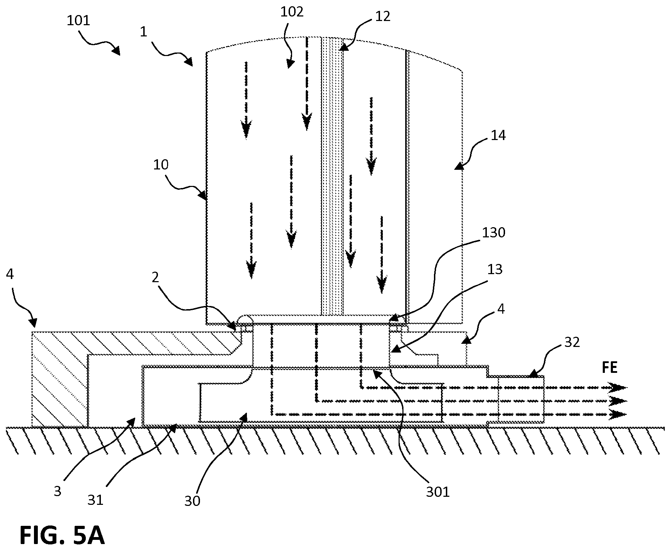

Selon un aspect particulier et comme illustré plus particulièrement aux figures 5 et 5A, l'extrémité inférieure de l'aile 1 est munie d'un élément de liaison 13 creux qui s'étend au moins en partie entre l'extrémité inférieure de l'aile 1 et le ventilateur 3 pour permettre une communication fluidique entre l'aile 1 et le ventilateur 3. L'élément de liaison 13 comprend une paroi d'adaptation qui présente une ouverture qui permet d'adapter la section de passage de flux d'air de l'intérieur du corps creux à l'ouverture 301 de la roue 30 (ou rotor) du ventilateur 3 centrifuge présentée ci-dessous. La roue peut être une roue à aubes. Comme expliqué ci-après le ventilateur peut aussi être de type hélico-centrifuge. Il est à noter que lorsqu'il est fait référence à un ventilateur hélico-centrifuge ou centrifuge, on entend l'ensemble de la roue et de l'enveloppe du ventilateur, en particulier pour déterminer l'encombrement du total du ventilateur.

### Dispositif d'aspiration

Le système générateur de portance comprend un dispositif d'aspiration en communication avec l'intérieur 102 de l'aile 1 pour aspirer l'air à travers ladite au moins une ouverture 12 ménagée dans la paroi périphérique de l'aile.

On peut prévoir que chaque ouverture 12 d'aspiration présente une dimension d'ouverture ou de porosité variable le long de l'aile, par exemple pour faire varier la quantité d'air aspirée en fonction de la position le long de l'aile. Chaque ouverture 12 peut être réalisée sous la forme d'une grille.

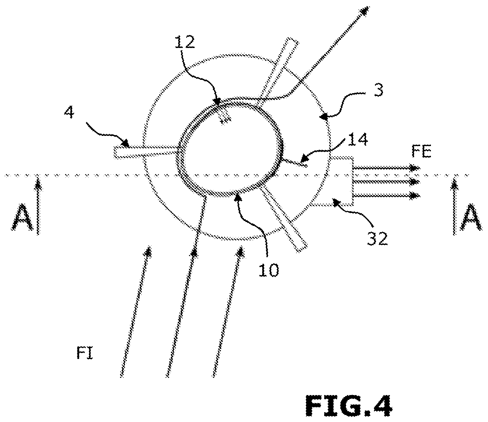

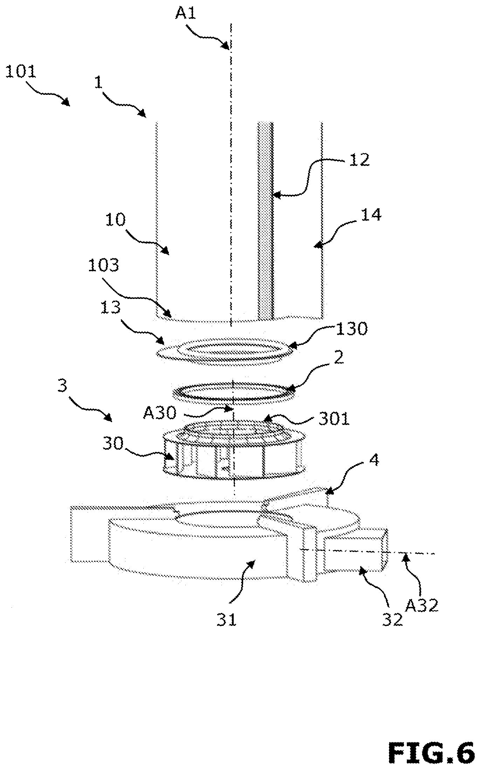

Comme illustré plus particulièrement aux Figures 4 à 6, ledit dispositif d'aspiration est formé par un ventilateur 3 qui comprend une roue 30, un moteur (non représenté) pour l'entrainement en rotation de la roue 30, et une enveloppe 31 (partie fixe autour de la roue) qui s'étend autour de la roue 30. L'enveloppe 31 (encore appelée volute ou collecteur) se présente sous la forme d'un corps qui définit autour de la roue, une conduite, de préférence de forme spiraloïde, permettant de guider l'air refoulé par la roue, jusqu'à une sortie 32. La géométrie de l'enveloppe 31 permet d'améliorer le rendement d'aspiration du ventilateur.

Le ventilateur 3 est configuré pour refouler le flux d'air aspiré à l'air libre. Le ventilateur 3 présente une entrée d'air d'axe A30 sensiblement orthogonal à l'axe de la sortie 32 de l'enveloppe 31 du ventilateur 3. Autrement dit, la direction d'aspiration d'air est sensiblement orthogonale à la direction de sortie d'air de l'enveloppe 31 du ventilateur. On comprend que l'axe A30 d'entrée d'air est de préférence orthogonal à l'axe de la sortie 32, mais qu'il peut aussi y avoir un léger angle d'inclinaison d'un ou de quelques degrés, par exemple un angle inférieur à 5°, de l'axe de sortie A32 de la sortie 32 de l'enveloppe 31 par rapport au plan orthogonal à l'axe A30. On peut prévoir que la sortie 32 de l'enveloppe 31 soit équipée d'une conduite de refoulement, de préférence configurée pour accélérer l'air refoulé.

Dans l'exemple illustré aux figures, le ventilateur est un ventilateur centrifuge. Selon le mode de réalisation illustré, la roue 30 est une roue à aubes 30. La roue à aubes 30 présente une entrée d'air 301 qui communique avec l'intérieur 102 de l'aile. En particulier l'entrée d'air 301 communique avec l'intérieur 102 de l'aile par l'intermédiaire de l'ouverture d'un mécanisme d'orientation, tel qu'une couronne d'orientation 2 (présentée ci-après), et de l'ouverture de l'élément 13 de liaison. En variante, le ventilateur peut être de type hélico-centrifuge. Un ventilateur hélico-centrifuge se distingue d'un ventilateur centrifuge en ce que, dans un ventilateur hélico-centrifuge, l'air qui ressort de la roue entre dans l'enveloppe, suivant une direction formant un angle de 30° à 80° par rapport à l'axe d'entrée d'air. Dans un ventilateur centrifuge, l'air qui ressort de la roue entre dans l'enveloppe, suivant une direction orthogonale à l'axe d'entrée d'air.

On notera que dans le système 101 générateur de portance selon l'invention, que le ventilateur soit de type centrifuge ou hélico-centrifuge, l'air qui sort de la sortie 32 de l'enveloppe 31 sort bien orthogonalement à l'axe d'aspiration.

Le ventilateur 3 centrifuge est situé à l'extérieur de l'aile 1 et est en communication fluidique avec l'intérieur 102 de l'aile 1 pour aspirer l'air à travers chaque ouverture 12 ménagée dans la paroi périphérique 10 de l'aile 1 et refouler l'air aspiré, par la sortie 32 de l'enveloppe 31 du ventilateur 3 centrifuge. Le flux d'air ainsi refoulé FE participe à la propulsion du bateau 100 sur lequel est monté le système 101 générateur de portance.

La sortie 32 du ventilateur 3 centrifuge est dirigée vers l'arrière du bateau. Avantageusement, le châssis du ventilateur 3 est fixe par rapport au support 4 et donc par rapport au pont du bateau, de sorte que la sortie 32 est aussi fixe.

L'ouverture de la paroi d'adaptation est bordée par un élément 130 périphérique qui s'étend du côté de l'intérieur de l'aile, et dont la section présente une forme courbe, de préférence convexe (bombée) par référence à une vue depuis l'intérieur du corps creux. Dans l'exemple illustré aux figures, cet élément 130 présente une forme générale torique. La paroi d'adaptation permet ainsi de guider l'écoulement du flux d'air aspiré en limitant les pertes de charge du flux d'air aspiré lors de sa circulation entre l'intérieur du corps creux et le ventilateur 3 centrifuge.

### Support

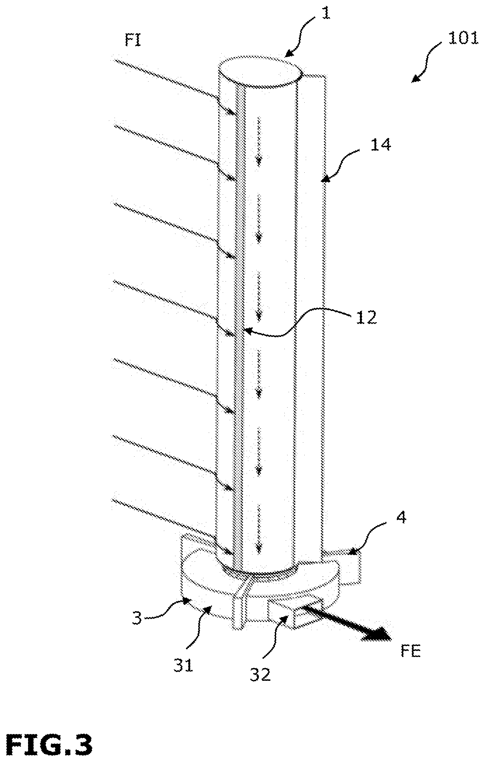

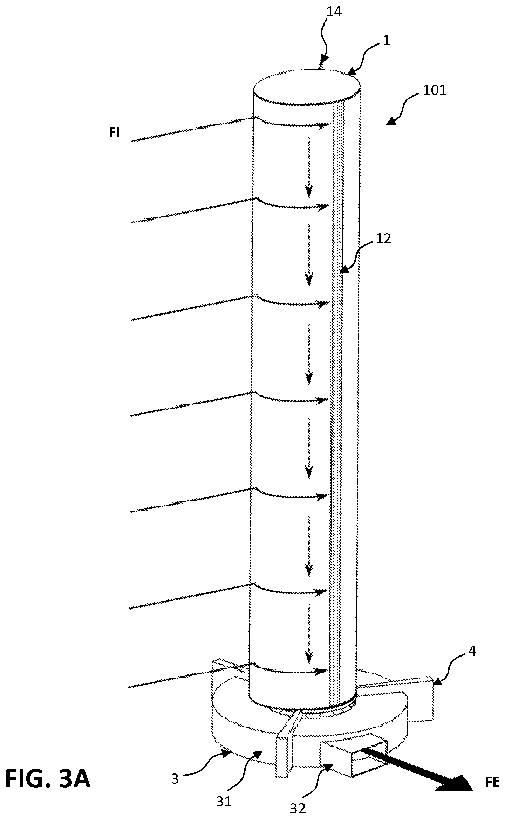

Le système 101 comprend un support 4 sur lequel l'aile 1 est montée pivotante (Figures 3 et 3A). Préférentiellement, l'aile est montée pivotante sur le support 4 autour d'un axe sensiblement parallèle à l'axe A1 longitudinal de l'aile. On comprend que l'axe de pivotement est de préférence parallèle à l'axe A1 longitudinal de l'aile, mais que l'axe de pivotement peut présenter un léger angle d'un ou de quelques degrés par rapport à l'axe A1, par exemple un angle inférieur à 5°. L'axe A1 est de préférence confondu avec l'axe de rotation de l'aile.

Ainsi, à l'état monté du système 101 sur le pont 111 du bateau 100, l'aile 1 peut tourner autour de son axe longitudinal (vertical) de manière à s'orienter par rapport à la direction du vent apparent.

En configuration d'utilisation du système où l'aile 1 est dressée sur le pont du navire par l'intermédiaire de son support 4, le support 4 est fixe par rapport au pont. Dans l'exemple illustré aux figures, le support se présente sous la forme d'un ensemble de plusieurs pieds. Le support peut être recouvert d'un capotage ou habillage.

Le système comprend un mécanisme d'orientation, tel qu'une couronne d'orientation 2, interposé entre l'aile 1 (de préférence la face inférieure 103 de l'aile) et le support 4, et configuré pour permettre à l'aile 1 de tourner, autour de son axe de pivotement, qui est sensiblement parallèle à l'axe A1, par rapport au support 4. Dans l'exemple illustré aux figures, le mécanisme d'orientation comprend une ouverture centrale qui est positionnée en regard de l'ouverture 301 d'entrée d'air du ventilateur 3 centrifuge, c'est-à-dire de l'ouverture d'entrée d'air de la roue à aubes 30.

Dans l'exemple illustré aux figures, le ventilateur 3 centrifuge est contenu dans l'enveloppe imaginaire qui entoure le support 4. Autrement dit, ventilateur 3 est situé dans l'encombrement hors-tout du support 4, ce qui permet de limiter l'encombrement du système 101 sur le pont du bateau.

Selon un mode de réalisation non illustré aux figures, l'aile est munie d'un dispositif générateur de portance verticale, monté à proximité de l'une et/ou l'autre des extrémités de l'aile. Préférentiellement, le dispositif générateur de portance verticale présente une surface plane ou profilée génératrice de portance verticale. Le dispositif générateur de portance verticale peut comporter au moins une partie qui est montée mobile autour d'un axe sensiblement orthogonal à l'axe de l'aile pour permettre d'incliner au moins une partie du dispositif générateur de portance verticale par rapport à l'aile.

On peut prévoir que le système 101 comprend un mécanisme de basculement qui permet de basculer l'aile, et éventuellement son support, autour d'un axe horizontal.

Le système de basculement permet de déplacer l'aile, et éventuellement son support, ente une position dressée, dans laquelle, à l'état monté du système sur le pont du bateau, elle s'étend perpendiculairement au pont du bateau, et une position basculée, dans laquelle, à l'état monté du système sur le pont du bateau, l'aile s'étend sensiblement parallèlement au pont du bateau.

Lorsque l'aile s'étend verticalement et pivote autour d'un axe sensiblement parallèle à l'axe de l'aile, c'est-à-dire lors du fonctionnement de l'aile - à l'état vertical de l'aile - et hormis l'éventuelle mobilité de bascule du support autour d'un axe orthogonal à l'axe de l'aile, le support reste fixe par rapport au pont du bateau. De manière similaire, le ventilateur est agencé de sorte que, lorsque l'aile s'étend verticalement et pivote autour d'un axe sensiblement parallèle à l'axe de l'aile, l'enveloppe du ventilateur reste fixe par rapport au pont du bateau.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Système (101) générateur de portance, destiné à être placé dans de l'air (FI) en mouvement, afin de produire une force de portance, le système (101) générateur de portance comprenant :
- un corps creux, appelé aile (1), allongé selon un axe (A1), la paroi périphérique (10) de l'aile présentant au moins une ouverture (12), appelée ouverture d'aspiration, adaptée à faire communiquer l'extérieur de l'aile avec l'intérieur (102) de l'aile (1) ; et
- un dispositif d'aspiration permettant d'aspirer l'air à travers ladite au moins une ouverture (12) d'aspiration ;
- -un support (4) qui porte l'aile et par rapport auquel l'aile (1) est montée pivotante autour d'un axe sensiblement parallèle à l'axe (A1) de l'aile, et ledit dispositif d'aspiration comprend un ventilateur (3);
le système générateur de portance étant **caractérisé en ce que** le ventilateur est situé à l'extérieur de l'aile (1) et en communication fluidique avec l'intérieur (102) de l'aile (1) pour aspirer l'air à travers ladite au moins une ouverture (12) d'aspiration de l'aile et refouler l'air aspiré par une sortie du ventilateur (3),
le ventilateur (3) comprenant une roue (30), entourée d'une enveloppe (31) qui définit autour de la roue une conduite permettant de guider l'air refoulé par la roue, et un moteur pour l'entrainement en rotation de la roue (30) autour d'un axe sensiblement parallèle à l'axe (A1) de l'aile, l'enveloppe (31) du ventilateur (3) présentant une sortie (32) d'axe (A32) sensiblement orthogonal à l'axe (A30) de la roue (30) du ventilateur.

2. Système (101) selon la revendication 1, dans lequel le système comprend un élément de liaison (13) creux qui s'étend au moins en partie entre l'extrémité inférieure de l'aile (1) et le ventilateur (3) pour permettre une communication fluidique entre l'aile (1) et le ventilateur (3).

3. Système (101) selon la revendication 2, dans lequel l'élément de liaison (13) comprend une paroi d'adaptation présentant une ouverture qui communique avec le ventilateur (3).

4. Système (101) selon la revendication 3, dans lequel la paroi d'adaptation est munie d'un élément (130) annulaire qui s'étend autour de l'ouverture de la paroi d'adaptation et du côté de l'intérieur de l'aile (1), la section dudit élément (130) annulaire présentant un profil courbe, par exemple convexe, pour limiter les pertes de charge du flux d'air entre l'aile (1) et le ventilateur (3).

5. Système générateur de portance selon l'une quelconque des revendications précédentes, dans lequel le ventilateur (3) est contenu dans une enveloppe imaginaire qui entoure le support (4).

6. Système (101) selon l'une quelconque des revendications 1 à 5, dans lequel le ventilateur (3) est un ventilateur centrifuge.

7. Système (101) selon l'une quelconque des revendications 1 à 5, dans lequel le ventilateur (3) est un ventilateur hélico-centrifuge.

8. Système (101) selon l'une quelconque des revendications précédentes, dans lequel l'aile (1) est munie d'un dispositif générateur de portance verticale, monté à proximité de l'une et/ou l'autre des extrémités de l'aile.

9. Système (101) selon la revendication 8, dans lequel le dispositif générateur de portance verticale comporte au moins une partie qui est montée mobile autour d'un axe sensiblement orthogonal à l'axe (A1) de l'aile.

10. Système (101) selon l'une quelconque des revendications 8 ou 9, dans lequel le dispositif générateur de portance verticale comporte un système d'aspiration permettant d'aspirer l'air extérieur vers l'intérieur de l'aile.

11. Système (101) selon l'une quelconque des revendications précédentes, dans lequel la paroi périphérique (10) de l'aile (1) est munie d'un volet (14) mobile par rapport à la paroi périphérique (10) pour permettre la séparation du flux d'air extrados et du flux d'air intrados.

12. Système (101) selon l'une quelconque des revendications précédentes, dans lequel la paroi périphérique (10) de l'aile (1) présente deux ouvertures (12) d'aspiration, et un système d'obturation, tel qu'un volet (14), pour permettre d'obturer sélectivement l'une des ouvertures (12) d'aspiration et de libérer l'autre ouverture (12) d'aspiration.

13. Système (101) selon l'une quelconque des revendications précédentes, dans lequel l'enveloppe (31) du ventilateur (3) est prolongée par une conduite de refoulement de section variable, la section étant de préférence décroissante en direction de l'extrémité de sortie de la conduite de refoulement.

14. Système (101) selon l'une quelconque des revendications précédentes, dans lequel le système (101) comprend un système de basculement permettant de faire basculer l'aile, et éventuellement son support, autour d'un axe sensiblement orthogonal à l'axe (A1) de l'aile, de préférence sensiblement horizontal.

15. Bateau (100) comprenant au moins un système (101) générateur de portance selon l'une quelconque des revendications précédentes, dans lequel le ventilateur (3) est situé entre l'aile (1) et le pont (111) du bateau, et, l'aile (1) étant montée pivotante par rapport au pont du bateau autour d'un axe sensiblement parallèle à l'axe (A1) de l'aile.

16. Bateau (100) selon la revendication précédente, dans lequel, le support est agencé de sorte que, lorsque l'aile s'étend verticalement et pivote autour d'un axe sensiblement parallèle à l'axe (A1) de l'aile, le support (4) reste fixe par rapport au pont du bateau.

17. Bateau (100) selon la revendication 15 ou 16, dans lequel, le ventilateur (3) est agencé de sorte que, lorsque l'aile s'étend verticalement et pivote autour d'un axe sensiblement parallèle à l'axe (A1) de l'aile, l'enveloppe (31) du ventilateur (3) reste fixe par rapport au pont du bateau.

18. Bateau (100) selon l'une quelconque des revendications 15 à 17, dans lequel l'axe (A32) de la sortie (32) de l'enveloppe (31) du ventilateur (3) est dirigé vers l'arrière du bateau, de préférence sensiblement parallèlement à l'axe longitudinal du bateau.

## Patentansprüche

1. Vortrieb generierendes System (101), das dazu bestimmt ist, in Luft (FI) in Bewegung angeordnet zu werden, um eine Vortriebskraft zu erzeugen, wobei das Vortrieb generierende System (101) umfasst:
- einen hohlen Körper, Flügel (1) genannt, der entlang einer Achse (A1) langgestreckt ist, wobei die Umfangswand (10) des Flügels mindestens eine Öffnung (12), Ansaugöffnung genannt, umfasst, die dazu angepasst ist, den Außenraum des Flügels mit dem Innenraum (102) des Flügels (1) zu verbinden; und
- eine Ansaugvorrichtung, die es ermöglicht, die Luft durch die mindestens eine Ansaugöffnung (12) anzusaugen;
- einen Träger (4), der den Flügel trägt und in Bezug auf welchen der Flügel (1) um eine zu der Achse (A1) des Flügels im Wesentlichen parallele Achse drehbar gelagert ist, und wobei die Ansaugvorrichtung einen Ventilator (3) umfasst;
wobei das Vortrieb generierende System **dadurch gekennzeichnet ist, dass** der Ventilator außerhalb des Flügels (1) gelegen ist und in Fluidverbindung mit dem Innenraum (102) des Flügels (1) ist, um die Luft durch die mindestens eine Ansaugöffnung (12) des Flügels anzusaugen und die angesaugte Luft durch einen Auslass des Ventilators (3) zu fördern,
wobei der Ventilator (3) ein Rad (30) umfasst, das von einem Gehäuse (31) umgeben ist, das um das Rad einen Kanal definiert, der es ermöglicht, die von dem Rad geförderte Luft zu leiten, und einen Motor zum Drehantreiben des Rades (30) um eine im Wesentlichen parallel zur Achse (A1) des Flügels verlaufende Achse, wobei das Gehäuse (31) des Ventilators (3) einen Auslass (32) mit einer im Wesentlichen orthogonal zur Achse (A30) des Rades (30) des Ventilators verlaufenden Achse (A32) aufweist.

2. System (101) nach Anspruch 1, wobei das System ein hohles Verbindungselement (13) umfasst, das sich mindestens teilweise zwischen dem unteren Ende des Flügels (1) und dem Ventilator (3) erstreckt, um eine Fluidverbindung zwischen dem Flügel (1) und dem Ventilator (3) zu ermöglichen.

3. System (101) nach Anspruch 2, wobei das Verbindungselement (13) eine Adaptionswand umfasst, die eine Öffnung aufweist, die mit dem Ventilator (3) kommuniziert.

4. System (101) nach Anspruch 3, wobei die Adaptionswand mit einem ringförmigen Element (130) versehen ist, das sich um die Öffnung der Adaptionswand und auf der Seite des Innenraums des Flügels (1) erstreckt, wobei der Querschnitt des ringförmigen Elements (130) ein gekrümmtes, zum Beispiel konvexes, Profil aufweist, um die Druckverluste des Luftstroms zwischen dem Flügel (1) und dem Ventilator (3) zu begrenzen.

5. Vortrieb generierendes System nach einem der vorhergehenden Ansprüche, wobei der Ventilator (3) in einem imaginären Gehäuse enthalten ist, das den Träger (4) umgibt.

6. System (101) nach einem der Ansprüche 1 bis 5, wobei der Ventilator (3) ein Radialventilator ist.

7. System (101) nach einem der Ansprüche 1 bis 5, wobei der Ventilator (3) ein Halbradialventilator ist.

8. System (101) nach einem der vorhergehenden Ansprüche, wobei der Flügel (1) mit einer Auftrieb generierenden Vorrichtung versehen ist, die in der Nähe des einen und/oder des anderen Endes des Flügels montiert ist.

9. System (101) nach Anspruch 8, wobei die Auftrieb generierende Vorrichtung mindestens einen Teil umfasst, der um eine im Wesentlichen orthogonal zur Achse (A1) des Flügels verlaufende Achse beweglich gelagert ist.

10. System (101) nach einem der Ansprüche 8 und 9, wobei die Auftrieb generierende Vorrichtung ein Ansaugsystem umfasst, das es ermöglicht, Außenluft zum Innenraum des Flügels hin anzusaugen.

11. System (101) nach einem der vorhergehenden Ansprüche, wobei die Umfangswand (10) des Flügels (1) mit einer Klappe (14) versehen ist, die in Bezug auf die Umfangswand (10) beweglich ist, um die Trennung des anströmseitigen Luftstroms und des abströmseitigen Luftstroms zu ermöglichen.

12. System (101) nach einem der vorhergehenden Ansprüche, wobei die Umfangswand (10) des Flügels (1) zwei Ansaugöffnungen (12) umfasst und ein Verschlusssystem wie eine Klappe (14), um zu ermöglichen, selektiv eine der Ansaugöffnungen (12) zu verschließen und die andere Ansaugöffnung (12) freizugeben.

13. System (101) nach einem der vorhergehenden Ansprüche, wobei das Gehäuse (31) des Ventilators (3) durch einen Förderkanal mit variablem Querschnitt verlängert wird, wobei der Querschnitt vorzugsweise in Richtung des Auslassendes des Förderkanals abnimmt.

14. System (101) nach einem der vorhergehenden Ansprüche, wobei das System (101) ein Kippsystem umfasst, das es ermöglicht, den Flügel und gegebenenfalls seinen Träger um eine im Wesentlichen orthogonal zur Achse (A1) des Flügels verlaufende, vorzugsweise im Wesentlichen horizontale, Achse zu kippen.

15. Schiff (100), das mindestens ein Vortrieb generierendes System (101) nach einem der vorhergehenden Ansprüche umfasst, wobei der Ventilator (3) zwischen dem Flügel (1) und dem Deck (111) des Schiffs gelegen ist und wobei der Flügel (1) in Bezug auf das Deck des Schiffs um eine im Wesentlichen parallel zur Achse (A1) des Flügels verlaufende Achse drehbar gelagert ist.

16. Schiff (100) nach dem vorhergehenden Anspruch, wobei der Träger so angeordnet ist, dass, wenn sich der Flügel vertikal erstreckt und um eine im Wesentlichen parallel zur Achse (A1) des Flügels verlaufende Achse dreht, der Träger (4) in Bezug auf das Deck des Schiffs feststehend bleibt.

17. Schiff (100) nach Anspruch 15 oder 16, wobei der Ventilator (3) so angeordnet ist, dass, wenn sich der Flügel vertikal erstreckt und um eine im Wesentlichen parallel zur Achse (A1) des Flügels verlaufende Achse dreht, das Gehäuse (31) des Ventilators (3) in Bezug auf das Deck des Schiffs feststehend bleibt.

18. Schiff (100) nach einem der Ansprüche 15 bis 17, wobei die Achse (A32) des Auslasses (32) des Gehäuses (31) des Ventilators (3) zum Heck des Schiffs hin gerichtet ist, vorzugsweise im Wesentlichen parallel zur Längsachse des Schiffs.

## Claims

1. A lift-generating system (101) intended to be placed in moving air (FI) so as to produce a lift force, the lift-generating system (101) comprising:
- a hollow body, referred to as a sail (1), that is elongate along an axis (A1), the peripheral wall (10) of the sail having at least one opening (12), referred to as suction opening, designed to cause the outside of the sail to communicate with the inside (102) of the sail (1); and
- a suction device allowing air to be drawn in through said at least one suction opening (12);
- a support (4) which supports the sail and with respect to which the sail (1) is mounted with the ability to pivot about an axis substantially parallel to the axis (A1) of the sail,
and said suction device comprises a fan (3);
the lift-generating system (101) being **characterized in that** the fan is situated outside the sail (1) and in communication with the inside (102) of the sail (1) so as to draw air through said at least one suction opening (12) in the sail and discharge the drawn-in air via an outlet of the fan (3),
the fan (3) comprising an impeller wheel (30), surrounded by a housing (31) which defines, around the impeller wheel, a duct able to guide the air discharged by the impeller wheel, and a motor to drive the rotation of the impeller wheel (30) about an axis substantially parallel to the axis (A1) of the sail, the housing (31) of the fan (3) having an outlet (32) of axis (A32) substantially orthogonal to the axis (A30) of the impeller wheel (30) of the fan.

2. The system (101) as claimed in claim 1, wherein the system comprises a hollow connecting element (13) which extends at least partly between the lower end of the sail (1) and the fan (3) to allow fluidic communication between the sail (1) and the fan (3).

3. The system (101) as claimed in claim 2, wherein the connecting element (13) comprises a form-matching wall having an opening that communicates with the fan (3).

4. The system (101) as claimed in claim 3, wherein the form-matching wall is equipped with an annular element (130) which extends around the opening of the form-matching wall and on the side of the inside of the sail (1), the cross section of said annular element (130) having a curved, for example convex, profile so as to limit the pressure drops experienced by the air flow between the sail (1) and the fan (3).

5. The lift-generating system as claimed in any one of the preceding claims, wherein the fan (3) is contained within an imaginary housing that surrounds the support (4).

6. The system (101) as claimed in any one of claims 1 to 5, wherein the fan (3) is a centrifugal fan.

7. The system (101) as claimed in any one of claims 1 to 5, wherein the fan (3) is a mixed-flow fan.

8. The system (101) as claimed in any one of the preceding claims, wherein the sail (1) is equipped with a device that generates vertical lift, which device is mounted close to one and/or the other of the ends of the sail.

9. The system (101) as claimed in claim 8, wherein the device that generates vertical lift comprises at least a part which is mounted with the ability to move about an axis substantially orthogonal to the axis (A1) of the sail.

10. The system (101) as claimed in either one of claims 8 or 9, wherein the device that generates vertical lift comprises a suction system allowing air from outside to be drawn into the inside of the sail.

11. The system (101) as claimed in any one of the preceding claims, wherein the peripheral wall (10) of the sail (1) is equipped with a flap (14) that is able to move relative to the peripheral wall (10) to make it possible to separate the suction-face air flow from the pressure-face air flow.

12. The system (101) as claimed in any one of the preceding claims, wherein the peripheral wall (10) of the sail (1) has two suction openings (12) and a shutoff system, such as a flap (14), so as to allow one of the suction openings (12) to be selectively shut off and the other suction opening (12) to be uncovered.

13. The system (101) as claimed in any one of the preceding claims, wherein the housing (31) of the fan (3) is extended by a variable-section discharge duct, the cross section preferably decreasing toward the outlet end of the discharge duct.

14. The system (101) as claimed in any one of the preceding claims, wherein the system (101) comprises a tilting system to allow the sail, and possibly its support, to be tilted about an axis substantially orthogonal to the axis (A1) of the sail, preferably a substantially horizontal axis.

15. A boat (100) comprising at least one lift-generating system (101) as claimed in any one of the preceding claims, wherein the fan (3) is situated between the sail (1) and the deck (111) of the boat, and, the sail (1) being mounted with the ability to pivot relative to the deck of the boat, about an axis substantially parallel to the axis (A1) of the sail.

16. The boat (100) as claimed in the preceding claim, wherein the support is arranged in such a way that when the sail is standing vertically and pivots about an axis substantially parallel to the axis (A1) of the sail, the support (4) remains fixed relative to the deck of the boat.

17. The boat (100) as claimed in claim 15 or 16, wherein the fan (3) is arranged in such a way that when the sail is standing vertically and pivots about an axis substantially parallel to the axis (A1) of the sail, the housing (31) of the fan (3) remains fixed relative to the deck of the boat.

18. The boat (100) as claimed in any one of claims 15 to 17, wherein the axis (A32) of the outlet (32) of the casing (31) of the fan (3) is directed toward the stern of the boat, preferably substantially parallel to the longitudinal axis of the boat.
